# EUROPÄISCHE PATENTSCHRIFT

(11) **EP 3 511 628 B1**
(45) Veröffentlichungstag und Bekanntmachung des Hinweises auf die Patenterteilung: **30.06.2021**
(21) Anmeldenummer: 18212136.8
(22) Anmeldetag: 13.12.2018
(51) Int. Cl.: F24C 7/08, G05B 99/00, A47L 15/00, D06F 9/00, F25D 29/00, H04L 12/28, D06F 34/05

(54) **VERFAHREN ZUR VERBESSERTEN EINBINDUNG EINES WLAN-FÄHIGEN HAUSHALTSGERÄTS IN EINE BENUTZERUMGEBUNG**
METHOD FOR IMPROVED INTEGRATION OF A WLAN-CAPABLE HOUSEHOLD APPLIANCE INTO A USER ENVIRONMENT
PROCÉDÉ D'INTÉGRATION AMÉLIORÉE D'UN APPAREIL ÉLECTROMÉNAGER CAPABLE D'ACCÉDER AU RÉSEAU LOCAL SANS FIL DANS UN ENVIRONNEMENT UTILISATEUR

(30) Priorität: 16.01.2018 DE 102018100840
(43) Veröffentlichungstag der Anmeldung: 17.07.2019
(73) Patentinhaber: Miele & Cie. KG, 33332 Gütersloh (DE)
(72) Erfinder: Langhammer, Nils, 33415 Verl (DE)

(56) Entgegenhaltungen:
- EP-A1- 3 055 974
- EP-A1- 3 149 547
- WO-A1-2015/039874
- WO-A1-2017/136489
- WO-A1-2017/190921
- DE-A1- 4 103 913
- DE-A1-102009 002 774
- DE-A1-102012 200 714
- DE-A1-102014 114 538
- DE-A1-102015 115 572
- US-A1- 2015 156 074

## Beschreibung

Aus der WO 2017/190921 A1 ist ein Verfahren zum Anbinden eines Kommunikationsmoduls an einen netzbasierten Dienst bekannt, wobei die Übermittlung der Zugangsdaten an das Kommunikationsmodul als akustische, nicht-sprachliche Tonfolge erfolgt. Die Erfindung betrifft ein System zur verbesserten Einbindung eines WLAN-fähigen Haushaltsgeräts in eine Benutzerumgebung, mit: einer Cloud-Plattform, welche einen Cloud-Dienst bereitstellt, einer Datenverteileinrichtung, welche ein lokales Drahtlosnetzwerk bereitstellt, und einem in die Benutzerumgebung einzubindenden Haushaltsgerät.

Weiterer relevanter Stand der Technik ist aus den Dokumenten WO2015/039874 A1, US 2015/156074 A1 und EP 3 149 547 A1 bekannt.

Immer mehr Haushaltsgeräte verfügen über eine WLAN-Fähigkeit, um über eine Datenverteileinrichtung, wie etwa einen WLAN-Router, eine Internetverbindung aufzubauen. Häufig geht dies auch mit Anmeldung bei einem Cloud-Dienst einer Cloudplattform einher. f

Die nötige Inbetriebnahme und Einbindung in ein Heim-WLAN-Netz und die Anmeldung bei dem Cloud-Dienst ist für den Benutzer jedoch relativ kompliziert und unkomfortabel. Es ist hierzu nötig, die WLAN-Zugangsdaten und die Cloud-Anmeldedaten auf das einzubindende Haushaltsgerät zu bringen. Dies kann insbesondere für Haushaltsgeräte, die keine oder nur eine sehr minimale Benutzerschnittstelle aufweisen, ein sehr unkomfortables Unterfangen darstellen, das viele Benutzer überfordert oder von dem Versuch abhält. Durch die Komplexität und die damit einhergehende hohe Fehleranfälligkeit kann der Benutzer zudem schnell frustriert sein.

Die der Erfindung zugrundeliegende Aufgabe besteht somit darin, die Inbetriebnahme und Einbindung eines WLAN-fähigen Haushaltsgeräts in eine Benutzerumgebung zu vereinfachen.

Die Erfindung macht sich die Erkenntnis zunutze, dass Interaktionen zwischen einem Benutzer und dem einzubindenden Haushaltsgerät zu vermeiden sind, um den Einbindungsvorgang des Haushaltsgeräts in die Benutzerumgebung zu vereinfachen. Dadurch, dass das Ausführen der Anmeldungen durch das Haushaltsgerät an dem lokalen Drahtlosnetzwerk und dem Cloud-Dienst über eine Benutzeranwendung auf einem separaten Steuerungsgerät veranlasst wird, ist die Betätigung des einzubindenden Haushaltsgeräts oder zumindest die Eingabe von Zugangs- und/oder Anmeldedaten an dem einzubindenden Haushaltsgerät nicht länger notwendig. Somit besteht keine Notwendigkeit mehr, entsprechende Eingaben über unkomfortabel zu benutzende Benutzerschnittstellen entsprechender Haushaltsgeräte einzugeben. Auf diese Weise kann die Einbindung eines Haushaltsgeräts in eine Benutzerumgebung äußerst komfortabel und benutzerfreundlich gestaltet werden, sodass die Inbetriebnahme und Einbindung eines WLAN-fähigen Haushaltsgeräts wesentlich vereinfacht wird.

Vorzugsweise stellt das lokale Drahtlosnetzwerk eine Internetverbindung zur Verfügung, welche das Haushaltsgerät zum Ausführen der Anmeldung bei dem Cloud-Dienst verwendet.

Die Zugangsdaten für das Haushaltsgerät werden dem Haushaltsgerät von einem bereits in die Benutzerumgebung eingebundenen Gerät zugesendet. Das bereits in die Benutzerumgebung eingebundene Gerät ist vorzugsweise bereits in dem lokalen Drahtlosnetzwerk und/oder bei dem Cloud-Dienst angemeldet. Die Datenverteileinrichtung ist vorzugsweise als Router ausgebildet und stellt das lokale Drahtlosnetzwerk zur Verfügung.

In einer Weiterbildung des Verfahrens erfordert das Ausführen der Anmeldung bei dem Cloud-Dienst das Übertragen von Anmeldedaten von dem Haushaltsgerät an eine Cloud-Plattform. Entsprechend werden die Anmeldedaten für das Haushaltsgerät dem Haushaltsgerät von einem bereits in die Benutzerumgebung eingebundenen Gerät zugesendet. Vorzugsweise erfolgt das Zusenden der Zugangsdaten für das Drahtlosnetzwerk und der Anmeldedaten für den Cloud-Dienst an das Haushaltsgerät durch das gleiche bereits in die Benutzerumgebung eingebundene Gerät. Die Zugangsdaten für das Drahtlosnetzwerk und/oder die Anmeldedaten für den Cloud-Dienst können dabei in einem Datenpaket und/oder kabellos von dem bereits in die Benutzerumgebung eingebundenen Gerät an das Haushaltsgerät übertragen werden. Da das Haushaltsgerät zu diesem Zeitpunkt noch nicht an dem lokalen Drahtlosnetzwerk angemeldet ist, erfolgt die Übertragung der Zugangsdaten und/oder der Anmeldedaten über einen separaten Kommunikationskanal.

Ferner ist ein Verfahren vorteilhaft, bei welchem das bereits in die Benutzerumgebung eingebundene Gerät ebenfalls als Haushaltsgerät ausgebildet ist. Das einzubindende Haushaltsgerät und/oder das bereits in die Benutzerumgebung eingebundene Gerät kann beispielsweise ein Backofen, ein Dampfgarer, ein Kochfeld, eine Dunstabzugshaube, ein Kaffeeautomat, ein Kältegerät, ein Geschirrspüler, eine Waschmaschine, ein Trockner, ein Bügelgerät, ein Staubsauger oder ein anderes Haushaltsgerät sein.

In einer anderen bevorzugten Ausführungsform des beispielhaften Verfahrens wird ein softwarebasierter drahtloser Zugangspunkt durch das Haushaltsgerät erzeugt und/oder das bereits in die Benutzerumgebung eingebundene Gerät wird mit dem softwarebasierten drahtlosen Zugangspunkt zur Bereitstellung eines drahtlosen Kommunikationskanals zwischen dem Haushaltsgerät und dem bereits in die Benutzerumgebung eingebundenen Gerät verbunden. Vorzugsweise handelt es sich bei dem softwarebasierten drahtlosen Zugangspunkt um einen sogenannten Soft-Access-Point. Vorzugsweise führt das bereits in die Benutzerumgebung eingebundene Gerät einen SSID-Scan aus, um den softwarebasierten drahtlosen Zugangspunkt, welcher durch das Haushaltsgerät erzeugt wurde, zu erfassen und eine Verbindung mit dem Haushaltsgerät über den softwarebasierten drahtlosen Zugangspunkt aufzubauen. Das Erzeugen des softwarebasierten drahtlosen Zugangspunkts und/oder das Verbinden des Haushaltsgeräts mit dem bereits in die Benutzerumgebung eingebundenen Geräts kann dabei beispielsweise nach einem in der Druckschrift DE 10 2016 106 231 A1 beschriebenen Verfahren erfolgen.

Außerdem ist ein beispielhaftes Verfahren vorteilhaft, bei welchem das Erzeugen des drahtlosen Zugangspunkts durch das Haushaltsgerät über eine Benutzerschnittstelle an dem Haushaltsgerät und/oder selbsttätig nach Einschalten des Haushaltsgeräts erfolgt. Vorzugsweise aktiviert ein Benutzer den softwarebasierten drahtlosen Zugangspunkt über eine Benutzerschnittstelle des Haushaltsgeräts. Sofern das Haushaltsgerät noch keine gültige Konfiguration für ein lokales Drahtlosnetzwerk erhalten hat, wird vorzugsweise automatisch der softwarebasierte drahtlose Zugangspunkt erzeugt. Insbesondere kann der softwarebasierte drahtlose Zugangspunkt für einen begrenzten Zeitraum, beispielsweise für 30 Minuten, nach Einschalten des Haushaltsgeräts geöffnet bzw. verfügbar sein, sofern das Haushaltsgerät noch keine gültige Konfiguration für ein lokales Drahtlosnetzwerk erhalten hat. Wenn das Haushaltsgerät die Zugangsdaten für das lokale Drahtlosnetzwerk von dem bereits in die Benutzerumgebung eingebundenen Gerät erhalten hat, erfolgt vorzugsweise automatisch eine Anmeldung an dem lokalen Drahtlosnetzwerk unter Verwendung der bereitgestellten Zugangsdaten. Sofern das lokale Drahtlosnetzwerk nicht verfügbar ist, erfolgen trotzdem entsprechende Anmeldeversuche durch das Haushaltsgerät über zumindest einen beschränkten Zeitraum. Die Konfiguration des Haushaltsgeräts, welche ein Verbinden mit dem lokalen Drahtlosnetzwerk erlaubt, kann beispielsweise durch ein Zurücksetzen des Haushaltsgeräts oder eines Netzwerkmoduls des Haushaltsgeräts auf Werkseinstellungen verworfen werden.

Darüber hinaus ist ein beispielhaftes Verfahren bevorzugt, bei welchem ein Anmeldebefehl für das Haushaltsgerät von der Benutzeranwendung auf dem separaten Steuerungsgerät an den Cloud-Dienst gesendet wird. Die Benutzeranwendung kann beispielsweise eine Anwendung auf einem mobilen Endgerät, wie etwa einem Smartphone oder einem Tablet, sein. Durch Bedienen des mobilen Endgeräts kann somit der Sendevorgang des Anmeldebefehls initiiert werden. Alternativ oder zusätzlich kann die Benutzeranwendung auch eine Sprachsteuerungsanwendung sein. Vorzugsweise ist das Steuerungsgerät ein Sprachsteuerungsgerät, welches akustische Steuerungsbefehle verarbeiten und/oder auswerten kann.

In einer anderen Ausführungsform des Verfahrens wird ein Anmeldebefehl für das Haushaltsgerät von dem Cloud-Dienst an das bereits in die Benutzerumgebung eingebundene Gerät gesendet. Alternativ oder zusätzlich erzeugt der Cloud-Dienst die Anmeldedaten für das Haushaltsgerät und/oder die Anmeldedaten für das Haushaltsgerät werden von dem Cloud-Dienst an das bereits in die Benutzerumgebung eingebundene Gerät gesendet. Das Senden der Anmeldedaten für das Haushaltsgerät von dem Cloud-Dienst an das bereits in die Benutzerumgebung eingebundene Gerät erfolgt vorzugsweise unter Verwendung des lokalen Drahtlosnetzwerks. Die Anmeldedaten können beispielsweise temporäre Anmeldedaten sein, welche lediglich eine einmalige Erstanmeldung erlauben. Nach erfolgter Erstanmeldung des Haushaltsgeräts bei dem Cloud-Dienst können die temporären Anmeldedaten dann durch dauerhafte Anmeldedaten ersetzt werden.

Die der Erfindung zugrunde liegende Aufgabe wird durch ein System der eingangs genannten Art gelöst, wobei das erfindungsgemäße System eine Benutzeranwendung auf einem separaten Steuerungsgerät aufweist, welche dazu eingerichtet ist, das Ausführen von Anmeldungen durch das Haushaltsgerät an dem lokalen Drahtlosnetzwerk und bei dem Cloud-Dienst zu veranlassen. Hinsichtlich der Vorteile und Modifikationen des erfindungsgemäßen Systems wird zunächst auf die Vorteile und Modifikationen des erfindungsgemäßen Verfahrens verwiesen.

In der Ausführungsform des erfindungsgemäßen Systems umfasst dieses ein bereits in die Benutzerumgebung eingebundenes Gerät, welches dazu eingerichtet ist, dem in die Benutzerumgebung einzubindenden Haushaltsgerät Zugangsdaten zum Ausführen der Anmeldung an dem lokalen Drahtlosnetzwerk und/oder Anmeldedaten zum Ausführen der Anmeldung bei dem Cloud-Dienst bereitzustellen. Das Bereitstellen der Zugangsdaten und/oder der Anmeldedaten erfolgt dabei vorzugsweise über einen separaten Kommunikationskanal. Vorzugsweise ist das Haushaltsgerät dazu eingerichtet, einen softwarebasierten drahtlosen Zugangspunkt zu erzeugen. Vorzugsweise ist das bereits in die Benutzerumgebung eingebundene Gerät dazu eingerichtet, den softwarebasierten drahtlosen Zugangspunkt zu erfassen und eine Kommunikationsverbindung über den erfassten softwarebasierten drahtlosen Zugangspunkt mit dem Haushaltsgerät aufzubauen. Vorzugsweise kann das bereits in die Benutzerumgebung eingebundene Gerät zur Erfassung des softwarebasierten drahtlosen Zugangspunkts dazu eingerichtet sein, einen SSID-Scan durchzuführen.

In dem erfindungsgemäßen System ist das separate Steuerungsgerät ein mobiles Endgerät und die Benutzeranwendung ist eine Sprachsteuerungsanwendung, über welche ein Anmeldebefehl für das Haushaltsgerät an den Cloud-Dienst übertragbar ist.

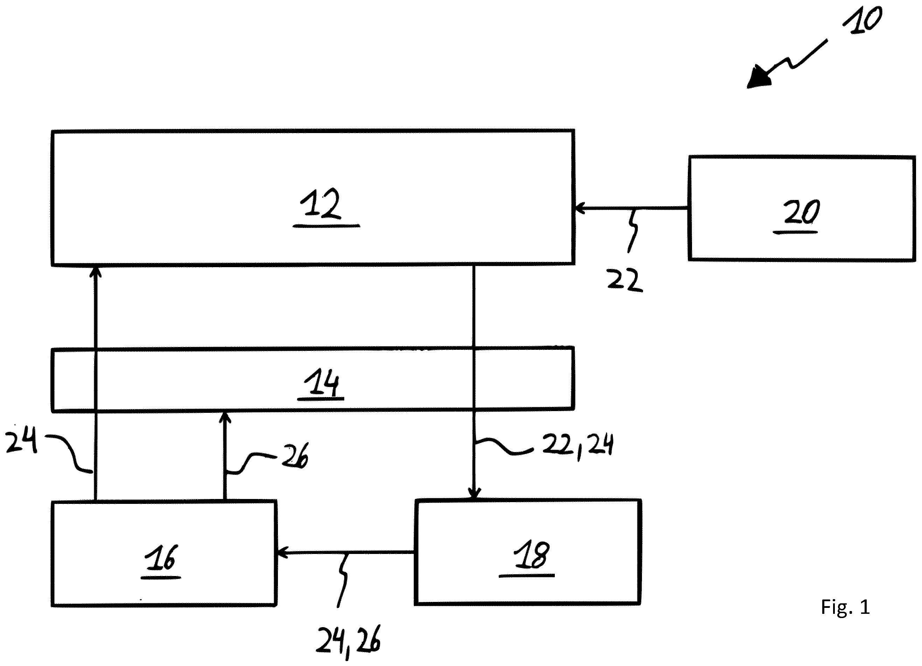

Weitere Merkmale und Details der Erfindung sind der nachfolgenden Figurenbeschreibung und den Ansprüchen zu entnehmen. Es zeigt
- Fig. 1: ein Ausführungsbeispiel der erfindungsgemäßen Systems in einer schematischen Darstellung.

Die Fig. 1 zeigt ein System 10 zur verbesserten Einbindung eines WLAN-fähigen Haushaltsgeräts 16 in eine Benutzerumgebung. Das System 10 umfasst eine Cloud-Plattform 12, eine Datenverteileinrichtung 14, das in die Benutzerumgebung einzubindende Haushaltsgerät 16, ein bereits in die Benutzerumgebung eingebundenes Gerät 18 und ein separates Steuerungsgerät 20.

Die Cloud-Plattform 12 stellt einen Cloud-Dienst bereit, welcher die Überwachung und Steuerung von Geräten erlaubt, welche in eine entsprechende Benutzerumgebung eingebunden sind. Die Benutzerumgebung kann beispielsweise eine Smart-Home-Umgebung sein. Die Datenverteileinrichtung 14 ist als Router ausgebildet und stellt ein lokales Drahtlosnetzwerk bereit. Das lokale Drahtlosnetzwerk ist mit dem Internet verbunden und erlaubt somit einen Zugriff des Cloud-Dienstes auf die in dem lokalen Drahtlosnetzwerk angemeldeten Geräte.

Das in die Benutzerumgebung einzubindende Haushaltsgerät 16 ist beispielsweise ein Backofen oder ein Kochfeld und verfügt über eine vergleichsweise einfache Benutzerschnittstelle, sodass der Eingabekomfort für Zugangs- oder Anmeldedaten an dem Haushaltsgerät 16 sowie die Informationsdarstellung durch das Haushaltsgerät 16 äußerst beschränkt sind.

Das bereits in die Benutzerumgebung eingebundene Gerät 18 ist dazu eingerichtet, dem in die Benutzerumgebung einzubindenden Haushaltsgerät 16 Zugangsdaten 26 zum Ausführen der Anmeldungen an dem lokalen Drahtlosnetzwerk und/oder Anmeldedaten 24 zum Ausführen der Anmeldungen bei dem Cloud-Dienst bereitzustellen.

Auf dem separaten Steuerungsgerät 20 ist eine Benutzeranwendung installiert, welche dazu eingerichtet ist, das Ausführen von Anmeldungen durch das Haushaltsgerät 16 an dem lokalen Drahtlosnetzwerk und bei dem Cloud-Dienst zu veranlassen. Die Benutzeranwendung ist eine Sprachsteuerungsanwendung, über welche ein Anmeldebefehl 22 für das Haushaltsgerät 16 an den Cloud-Dienst übertragbar ist.

Das Verfahren zur Einbindung des Haushaltsgeräts 16 in die Benutzerumgebung wird dadurch eingeleitet, dass das Haushaltsgerät 16 einen softwarebasierten drahtlosen Zugangspunkts erzeugt. Der softwarebasierte drahtlose Zugangspunkt ist ein Soft-Access-Point, welcher unabhängig von dem lokalen Drahtlosnetzwerk ist, welches die Datenverteileinrichtung 14 zur Verfügung stellt. Das Erzeugen des drahtlosen Zugangspunkts durch das Haushaltsgerät 16 erfolgt selbsttätig nach dem Einschalten des Haushaltsgeräts 16, sofern das Haushaltsgerät 16 noch über keine gültige Konfiguration für ein lokales Drahtlosnetzwerk verfügt.

Nachdem der softwarebasierte drahtlose Zugangspunkt durch das Haushaltsgerät 16 erzeugt worden ist, verbindet sich das bereits in die Benutzerumgebung eingebundene Gerät 18 mit dem softwarebasierten drahtlosen Zugangspunkt, um einen drahtlosen Kommunikationskanal zwischen dem Haushaltsgerät 16 und dem bereits in die Benutzerumgebung eingebundenen Gerät 18 bereitzustellen. Zur Erfassung des softwarebasierten drahtlosen Zugangspunkts führt das bereits in die Benutzerumgebung eingebundene Gerät 18 einen SSID-Scan durch, bevor die Herstellung der Verbindung erfolgt.

Nachdem der separate Kommunikationskanal zwischen dem Haushaltgerät 16 und dem Gerät 18 erzeugt worden ist, kann ein Benutzer das Steuerungsgerät 20 bedienen, um das Senden eines Anmeldebefehls 22 für das Haushaltsgerät 16 von der Benutzeranwendung auf dem Steuerungsgerät 20 an den Cloud-Dienst der Cloud-Plattform 12 zu veranlassen. Da die Benutzeranwendung eine Sprachsteuerungsanwendung ist, kann das Senden des Anmeldebefehls 22 an den Cloud-Dienst der Cloud-Plattform 12 durch einen Sprachbefehl des Benutzers erfolgen, welcher von der Sprachsteuerungsanwendung erfasst und verarbeitet wird.

Der Cloud-Dienst der Cloud-Plattform 12 erstellt auf Grundlage des empfangenen Anmeldebefehls 22 Anmeldedaten 24 für das Haushaltsgerät 16, mittels welchen sich das Haushaltsgerät 16 bei dem Cloud-Dienst anmelden kann. Die Anmeldedaten 24 für das Haushaltsgerät 16 werden dann gemeinsam mit dem Anmeldebefehl 22 von dem Cloud-Dienst an das bereits in die Benutzerumgebung eingebundene Gerät 18 gesendet.

Das bereits in die Benutzerumgebung eingebundene Gerät 18 wird durch den Anmeldebefehl 22 dazu veranlasst, die empfangenen Anmeldedaten 24 für das Haushaltsgerät 16 an das Haushaltsgerät 16 weiterzuleiten und dem Haushaltsgerät 16 außerdem Zugangsdaten 26 für das lokale Drahtlosnetzwerk zur Verfügung zu stellen.

Nachdem das Haushaltsgerät 16 die Anmeldedaten 24 für den Cloud-Dienst und die Zugangsdaten 26 für das lokale Drahtlosnetzwerk empfangen hat, führt das Haushaltsgerät zunächst eine Anmeldung an dem lokalen Drahtlosnetzwerk aus, sodass eine Internetverbindung über das lokale Drahtlosnetzwerk hergestellt werden kann. Das Ausführen der Anmeldung an dem lokalen Drahtlosnetzwerk erfordert das Übertragen der Zugangsdaten 26 von dem Haushaltsgerät 16 an die Datenverteileinrichtung 14, sodass das Haushaltgerät 16 die Zugangsdaten 26 an die Datenverteileinrichtung 14 sendet. Anschließend führt das Haushaltsgerät 16 über die Internetverbindung des Drahtlosnetzwerks eine Anmeldung bei dem Cloud-Dienst aus. Das Ausführen der Anmeldung bei dem Cloud-Dienst erfordert das Übertragen der Anmeldedaten 24 von dem Haushaltsgerät 16 an die Cloud-Plattform 12, sodass das Haushaltsgerät 16 die Anmeldedaten 24 an die Cloud-Plattform 12 sendet.

Das Ausführen der Anmeldungen an dem lokalen Drahtlosnetzwerk und bei dem Cloud-Dienst durch das Haushaltsgerät 16 wurde somit über die Benutzeranwendung auf dem Steuerungsgerät 20 veranlasst. Die Eingabe von Steuerungsbefehlen, Anmelde- und Zugangsdaten an dem Haushaltgerät 16 selbst ist nicht notwendig. Dies führt zu einer erheblichen Vereinfachung der Einbindung neuer Haushaltsgeräte 16 in existierende Benutzerumgebungen.

### Bezugszeichenliste

- 10: System
- 12: Cloud-Plattform
- 14: Datenverteileinrichtung
- 16: Haushaltsgerät
- 18: Gerät
- 20: Steuerungsgerät
- 22: Anmeldebefehl
- 24: Anmeldedaten
- 26: Zugangsdaten

## Patentansprüche

1. System (10) zur verbesserten Einbindung eines WLAN-fähigen Haushaltsgeräts (16) in eine Benutzerumgebung, mit:
- einer Cloud-Plattform (12), welche einen Cloud-Dienst bereitstellt;
- einer Datenverteileinrichtung (14), welche ein lokales Drahtlosnetzwerk bereitstellt; und
- einem in die Benutzerumgebung einzubindenden Haushaltsgerät (16);
- einer Benutzeranwendung auf einem separaten Steuerungsgerät (20), welche dazu eingerichtet ist, das Ausführen von Anmeldungen durch das Haushaltsgerät (16) an dem lokalen Drahtlosnetzwerk und bei dem Cloud-Dienst zu veranlassen,
ferner umfassend ein bereits in die Benutzerumgebung eingebundenes Gerät (18), das ebenfalls als Haushaltsgerät (16) ausgebildet ist, welches dazu eingerichtet ist, dem in die Benutzerumgebung einzubindenden Haushaltsgerät (16) Zugangsdaten (26) zum Ausführen der Anmeldung an dem lokalen Drahtlosnetzwerk und Anmeldedaten (24) zum Ausführen der Anmeldung bei dem Cloud-Dienst bereitzustellen;
wobei das separate Steuerungsgerät (20) ein mobiles Endgerät und die Benutzeranwendung eine Sprachsteuerungsanwendung ist, über welche ein Anmeldebefehl (22) für das Haushaltsgerät (16) an den Cloud-Dienst übertragbar ist.

## Claims

1. System (10) for improved integration of a WLAN-capable domestic appliance (16) into a user environment, comprising:
- a cloud platform (12) which provides a cloud service;
- a data distribution apparatus (14) which provides a local wireless network; and
- a domestic appliance (16) to be integrated into the user environment;
- a user application on a separate control device (20), which is designed to cause the domestic appliance (16) to carry out logins to the local wireless network and the cloud service,
further comprising a device (18) which is already integrated into the user environment and is also designed as a domestic appliance (16), which device is designed to provide the household appliance (16) to be integrated into the user environment with access data (26) for carrying out the login to the local wireless network and login data (24) for carrying out the login to the cloud service; wherein the separate control device (20) is a mobile terminal and the user application is a voice control application, by means of which a login command (22) for the domestic appliance (16) can be transmitted to the cloud service.

## Revendications

1. Système (10) pour l'intégration améliorée d'un appareil ménager (16) compatible avec le WiFi dans un environnement utilisateur, comportant :
- une plate-forme en nuage (12) qui fournit un service en nuage ;
- un dispositif de distribution de données (14) qui fournit un réseau sans fil local ; et
- un appareil ménager (16) à intégrer dans l'environnement utilisateur ;
- une application utilisateur sur un appareil de commande séparé (20) qui est configurée pour lancer l'exécution de demandes de connexion par l'appareil ménager (16) au réseau sans fil local et au service en nuage,
comprenant en outre un appareil (18) déjà intégré dans l'environnement utilisateur qui est également conçu en tant qu'appareil ménager (16) et qui est configuré pour fournir des données d'accès (26) pour exécuter la demande de connexion au réseau sans fil local et des données de connexion (24) pour exécuter la demande de connexion au service en nuage à l'appareil ménager (16) à intégrer dans l'environnement utilisateur ; l'appareil de commande séparé (20) étant un appareil terminal mobile et l'application utilisateur étant une application de commande vocale par l'intermédiaire de laquelle une instruction de connexion (22) pour l'appareil ménager (16) peut être transmise au service en nuage.
